# EUROPEAN PATENT APPLICATION

(11) **EP 4 742 121 A1**
(43) Date of publication of application: **13.05.2026**
(21) Application number: 25214556.0
(22) Date of filing: 10.11.2025
(51) Int. Cl.: G06Q 10/047, G06Q 10/083, G06V 20/56

(54) **SELECTING LOCATIONS FOR AN AUTOMATED CONSTRUCTION MACHINE TO UNLOAD CARGO**

(30) Priority: 12.11.2024 US 202463719554 P; 11.11.2024 US 202463718891 P; 11.11.2024 US 202463718913 P; 11.11.2024 US 202463718909 P; 11.11.2024 US 202463718900 P
(71) Applicant: Deere & Company, Moline, IL 61265 (US)
(72) Inventor: WARDEN, Grant, Santa Clara (US)
(74) Representative: Reddie & Grose LLP

(57) **Abstract**

A vehicle moves through an environment (e.g., a farming, construction, mining, or forestry environment) and performs one or more actions in the environment. A control system associated with the vehicle may include a mode selection module and a transportation determination module. In particular, the control system may employ a machine vision model to identify images captured for each region in the environment. The model identifies viable unloading locations in an unloading zone of the environment, and then navigates the vehicle to one or more unloading locations based on pixels of the image representing terrain features and existing cargo dump piles. Control signals for loading or unloading cargo are determined in alignment with a transportation protocol set by a site manager. A loading or unloading mechanism is then actuated using these control signals to unload cargo in the appropriate location.

## Description

### CROSS REFERENCE TO RELATED APPLICATIONS

This application claims the benefit of U.S. Provisional Application 63/719,554, filed on November 12, 2024, which is hereby incorporated by reference herein in its entirety.

### BACKGROUND

### FIELD OF DISCLOSURE

This disclosure relates to the field of identifying and selecting locations for an automated construction machine to unload cargo, and, more specifically, to determining an operation mode for an autonomous construction machine to efficiently unload cargo in cooperation with other autonomous and non-autonomous construction machines.

### DESCRIPTION OF RELATED ART

In the sectors of construction and mining, machinery often implements a Load, Haul, Dump, and Final Load system in which hauling equipment is loaded at the site where loose resources are extracted or stockpiled in mass, transported to a primary processing location, unloaded, and eventually re-loaded into processing apparatus or stockpiled for subsequent processing near the plant. In large-scale endeavors (such as those concerning copper mining), autonomous hauling gear delivers a high volume of ore, which can be immediately processed or kept where there is sufficient room for individual mounds to be separately stored.

In the coming years, smaller-scale construction, mining, aggregate production, agriculture, and other facilities will increasingly run mixed fleets of autonomous and non-autonomous machinery, encompassing haul trucks, wheel loaders, excavators, mobile crushers, and conveyance systems. Due to this combination of autonomous and non-autonomous equipment, relaying information regarding the status of transported materials which have been distributed across a jobsite will pose a major challenge. This necessitates a high level of independent operation for autonomous machines and an efficient coordination mechanism between human operators and autonomous systems.

### SUMMARY

A vehicle (e.g., a farming, construction, mining, or forestry vehicle) moves through an environment (e.g., a farming, construction, mining, or forestry environment) and performs one or more actions (e.g., farming, construction, mining, or forestry actions) in the environment.

Autonomous farming, construction, mining, or forestry vehicles (hereafter referred to as "hauling machines") can implement autonomous operating modes for performing one or more fundamental functions without human input. Such functions include transporting cargo to an unloading zone, identifying viable unloading locations within the unloading zone, and implementing an unloading plan to efficiently unload the cargo.

In an embodiment, an autonomous hauling machine can map out a plurality of discrete unloading locations within a jobsite and apply machine learning image processing to the mapped locations to identify a subset of preferred unloading locations.

In an embodiment, an autonomous hauling machine can identify one or more unloading locations corresponding to a specific type of cargo being transported.

In an embodiment, an autonomous hauling machine can identify and navigate to one or more preferred unloading locations in cooperation with a fleet of autonomous or non-autonomous hauling machines.

The descriptions above are applicable to a variety of different environments and hauling machines, such as mining vehicles (e.g., excavators and loaders), construction vehicles (e.g., motor graders), agricultural or farming vehicles (e.g., tractors), or forestry vehicles (e.g., forwarders).

### BRIEF DESCRIPTION OF DRAWINGS

FIG. 1A illustrates a block diagram of a vehicle that performs loading or unloading actions of a protocol, in accordance with an example embodiment.
FIG. 1B illustrates an isometric view of a construction vehicle, in accordance with an example embodiment.
FIG. 1C illustrates an isometric view of a second construction vehicle, in accordance with an example embodiment.
FIG. 2A illustrates a block diagram of a system environment for the vehicle, in accordance with an example embodiment.
FIG. 2B illustrates a schematic representation of an operating environment of the vehicle, in accordance with an example embodiment.
FIG. 3 illustrates a first workflow for determining an unloading plan for the vehicle to apply to one or more unloading zones of a jobsite, in accordance with one or more example embodiments.
FIG. 4 illustrates a second workflow for determining an unloading plan for the vehicle to apply to one or more unloading zones of a jobsite, in accordance with one or more example embodiments.
FIG. 5 illustrates a third workflow for determining control signals for a hauling machine to unload cargo at a preferred unloading location, in accordance with one or more example embodiments.
FIG. 6 is a block diagram illustrating components of an example machine for reading and executing instructions from a machine-readable medium, in accordance with one or more example embodiments.

The figures depict various embodiments for purposes of illustration only. One skilled in the art will readily recognize from the following discussion that alternative embodiments of the structures and methods illustrated herein may be employed without departing from the principles described herein.

### DETAILED DESCRIPTION

### I. INTRODUCTION

A hauling machine (e.g., a farming, construction, mining, landscaping, or forestry vehicle) includes one or more sensors capturing information about the surroundings as the vehicle moves through an environment. The environment can include various objects (e.g., ground and obstructions) used to determine actions (e.g., performing a jobsite action, modifying a jobsite parameter, modifying an operational parameter, and modifying a sensor parameter, etc.) for the hauling machine to operate in the environment.

The hauling machine includes a control system that processes the information obtained by the sensors to generate corresponding actions. For example, the control system processes information to identify objects to generate corresponding jobsite actions. There are many examples of a vehicle (e.g., a farming vehicle) processing visual information obtained by an image sensor coupled to the vehicle to identify and treat plants and identify and avoid obstructions. For example, the vehicle as described in U.S. Patent Application 16/126,842 titled "Semantic Segmentation to Identify and Treat Plants in a Construction environment and Verify the Plant Treatments," filed on September 10, 2018, which is hereby incorporated by reference in its entirety. The same systems and methods can be applied for a construction, mining, or forestry-type hauling machine configured to determine and perform jobsite actions.

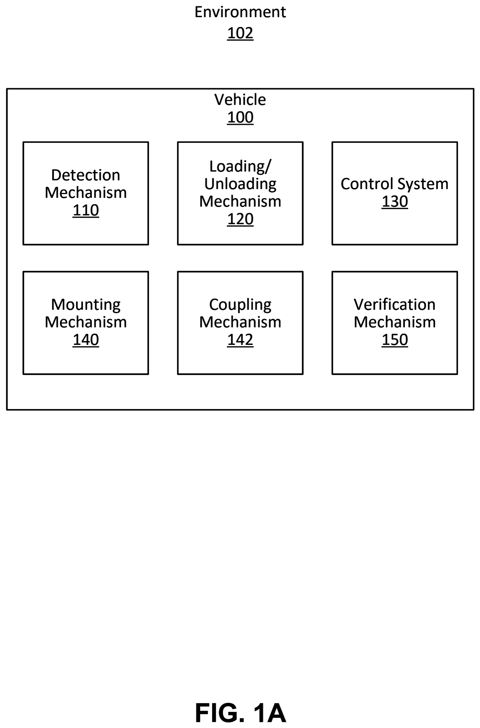

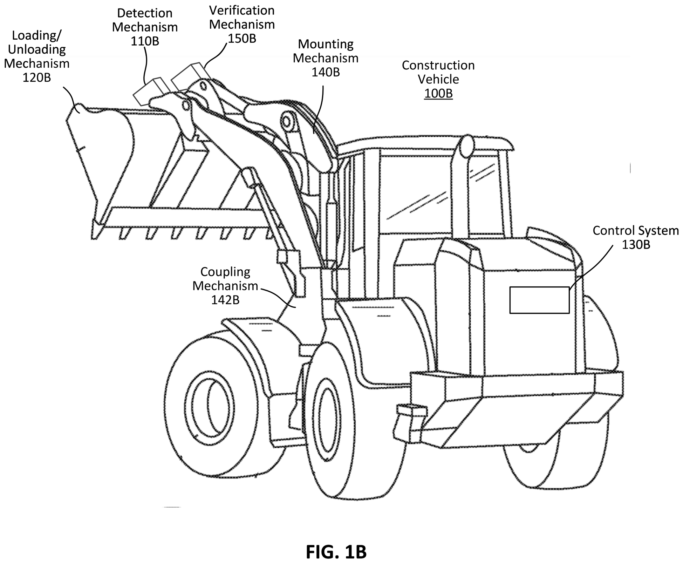

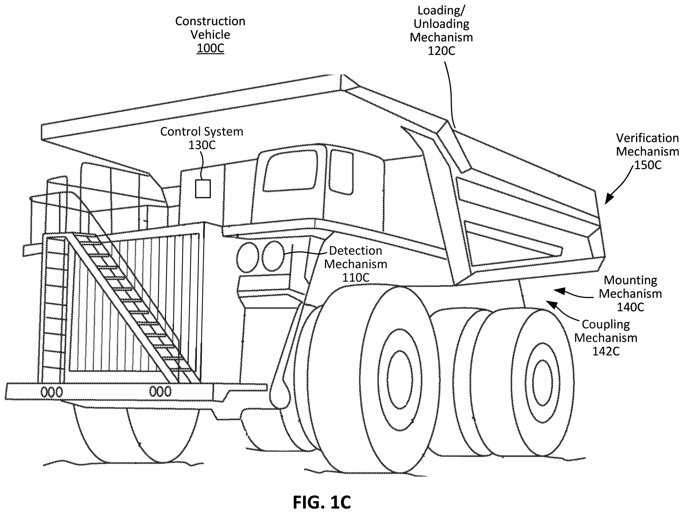

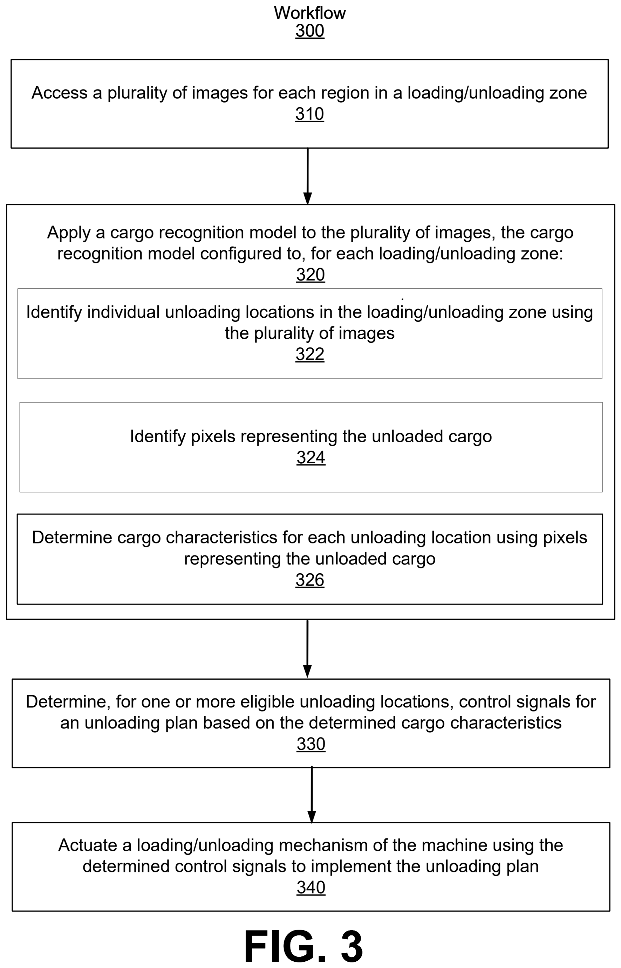

Embodiments described herein relate to determining an unloading plan for an autonomous or semi-autonomous construction, mining, or agricultural machine such that the machine can implement unloading actions to accomplish one or more transportation protocols on a jobsite. FIGs. 1-2 describe general information related to example hauling machines. FIGs. 3-5 describe example implementations of an autonomous hauling machine that autonomously identifies and navigates to unloading locations on a jobsite based on a variety of operating environment factors and characteristics to perform unloading actions that accomplish one or more transportation protocols.

### II. ENVIRONMENT MANAGEMENT AND PROTOCOLS

### Environment Management

Managers (e.g., agricultural, construction, mining, landscaping, or forestry managers) are responsible for managing operations in one or more environments. Managers work to implement an objective (e.g., a farming, construction, mining, landscaping, or forestry objective) within those environments and select from among a variety of jobsite actions (e.g., farming, construction, mining, landscaping, or forestry actions) to implement that objective. Traditionally, managers are, for example, a human (e.g., agronomist, jobsite manager) that works the environment (e.g., agricultural field, jobsite) but could also be other systems configured to manage operations within the environment. For example, a manager could be an automated machine (e.g., vehicle), a machine learned computer model, etc. In some cases, a manager may be a combination of the managers described above. For example, a manager may include a human assisted by a machine learned model and one or more automated machines.

Managers implement one or more objectives for an environment. An objective is typically a macro-level goal for an environment. For example, macro-level construction objectives may include moving and configuring building materials, excavating a construction site, removing debris, welding building materials together, or any other suitable construction objective. Macro-level mining objectives may include excavating and transporting ores and minerals from a mine to a storage location, characterizing and sorting different grades of pay dirt, processing and disposal of byproducts, or any other suitable mining objective. Effectively coordinating such macro-level transportation objectives amongst a fleet of autonomous and non-autonomous hauling machines can improve throughput and economic output of a jobsite.

Objectives may also be a micro-level goal for the environment. For example, micro-level construction objectives may include digging a hole in a particular location, repairing or correcting a part of construction equipment, requesting feedback from a manager, etc. Of course, there are many possible objectives and combinations of objectives, and the previously described examples are not intended to be limiting.

Objectives are accomplished (at least in part) by one or more vehicles performing a series of actions. Example vehicles are described in greater detail below. Actions (e.g., farming, construction, mining, landscaping, or forestry actions) are any operation implementable by a vehicle within the environment that works towards an objective. Consider, for example, a construction objective of building a fountain. This construction objective requires a litany of actions, e.g., excavating a site for the foundation of the fountain, installing plumbing, assembling and joining pieces of material, etc. Similarly, each construction action pertaining to building the fountain may be a construction objective in and of itself. For instance, installing plumbing for the fountain can require its own set of construction actions, e.g., digging in the ground, laying pipes, welding pipes, etc.

In other words, managers implement an action protocol ("protocol") in the environment to accomplish an objective. The protocol, depending on the machine form, may be a farming, construction, mining, landscaping, or forestry protocol. A protocol is a hierarchical set of macro-level or micro-level objectives that accomplish the objective of the manager. Within a protocol, each macro or micro-objective may require a set of actions to accomplish, or each macro or micro-objective may be an action itself. So, to expand, the protocol is a temporally sequenced set of actions to apply to the environment that the manager expects will accomplish the objective.

When executing a protocol in an environment, the protocol itself or its constituent objectives and actions have various results. A result is a representation as to whether, or how well, a vehicle accomplished the protocol, objective, or action. A result may be a qualitative measure such as "accomplished" or "not accomplished," or may be a quantitative measure such as "35% built." Results can also be positive or negative, depending on the configuration of the vehicle or the implementation of the protocol. Moreover, results can be measured by sensors of the vehicle, input by managers, or accessed from a datastore or a network.

Traditionally, managers have leveraged their experience, expertise, and technical knowledge when implementing actions in a protocol. In a first example, a manager may spot check dryness of the ground to determine whether concrete can be laid for a foundation. In a second example, a manager may refer to previous implementations of a protocol to determine the best time to build a house to avoid the rainy season. In a third example, a manager may rely on established best practices in determining a specific set of construction actions to perform in a protocol to accomplish a construction objective.

Leveraging manager and historical knowledge to make decisions for a protocol affects both spatial and temporal characteristics of a protocol. For example, construction actions in a protocol have historically been applied to an entire environment (e.g., building site) rather than small portions of the environment. To illustrate this example further, when a manager determines where to extract dirt within a jobsite, they select different extraction methods based on the location and type of dirt. Similarly, each action in a sequence of actions of a protocol are historically performed at approximately the same time. For example, when a manager decides to remove a boulder from a jobsite, any other boulders in the jobsite that need to be removed would be removed within a similar time range rather than sporadically.

Notably though, vehicles have greatly advanced in their capabilities. For example, vehicles continue to become more autonomous, include an increasing number of sensors and measurement devices, employ higher amounts of processing power and connectivity, and implement various machine vision algorithms to enable managers to successfully implement a protocol.

Because of this increase in capability, managers are no longer limited to spatially and temporally monolithic implementations of actions in a protocol. Instead, managers may leverage advanced capabilities of vehicles to implement protocols that are highly localized and determined by real-time measurements in the environment. In other words, rather than a manager applying a "best guess" protocol to an entire environment, they can implement individualized and informed protocols for each structure, piece of earth, hole in the environment, etc.

### III. HAULING MACHINES

A hauling machine that implements loading, transportation, and unloading actions of a protocol may have a variety of configurations, some of which are described in greater detail below.

FIG. 1A is a block diagram of a hauling machine 100 (also referred to as a work vehicle) that performs loading, transportation, or unloading actions of a protocol, according to an example embodiment. The hauling machine 100 may be a vehicle used for farming (e.g., a tractor), construction (e.g., a motor grader or roadbuilding equipment (e.g., milling machine)), mining (e.g., a dragline excavator or wheel loader), landscaping (e.g., mower), or forestry (e.g., a forwarder). In the example of FIG. 1A, the hauling machine 100 includes a detection mechanism 110, an interaction mechanism (e.g., a loading or unloading mechanism 120), a control system 130, a mounting mechanism 140, a coupling mechanism 142, and a verification mechanism 150. The described components and functions of the hauling machine 100 are just examples, and a machine can have different or additional components and functions other than those described below. For example, the hauling machine may also include a power source, digital memory, communication apparatus, or any other suitable component that enables the hauling machine 100 to implement actions in a protocol.

### Operating Environment

The hauling machine 100 operates in an operating environment 102 (also referred to as the environment 102). The environment 102 is a geographic area where the vehicle 100 implements actions of a protocol. Example environments include a farming field (indoor or outdoor), a construction site, lawn, a mine site, a forest, or, more generally, a jobsite. An environment may include any number of environment portions. An environment portion is a subunit of an environment. The hauling machine 100 can execute different actions for different environment portions. Moreover, an environment and an environment portion are largely interchangeable in the context of the methods and systems described herein. That is, protocols and their corresponding actions may be applied to an entire environment or an environment portion depending on the circumstances at play.

The operating environment 102 may include the ground and objects in, on, or above the ground. As such, actions the hauling machine 100 implements as part of a protocol may be applied to the ground. The ground may include soil but can alternatively include sponge or any other suitable ground type.

### Detection mechanism(s)

The hauling machine 100 may include a detection mechanism 110. The detection mechanism 110 identifies objects in the operating environment 102 of the hauling machine 100. To do so, the detection mechanism 110 obtains information describing the environment 102 (e.g., sensor or image data), and processes that information to identify pertinent objects (e.g., plants, the ground, building materials, persons, etc.) in the operating environment 102. Identifying objects in the environment 102 further enables the hauling machine 100 to implement actions in the environment.

The hauling machine 100 can include any number or type of detection mechanism 110 that may aid in determining and implementing actions. In some embodiments, the detection mechanism 110 includes one or more sensors. For example, the detection mechanism 110 can include a multispectral camera, a stereo camera, a CCD camera, a single lens camera, a CMOS camera, hyperspectral imaging system, LIDAR system (light detection and ranging system), a depth sensing system, dynamometer, IR camera, thermal camera, humidity sensor, light sensor, temperature sensor, or any other suitable sensor. Further, the detection mechanism 110 may include an array of sensors (e.g., an array of cameras) configured to capture information about the environment 102 surrounding the hauling machine 100. For example, the detection mechanism 110 may include an array of cameras configured to capture an array of pictures representing the environment 102 surrounding the hauling machine 100. The detection mechanism 110 may also be a sensor that measures a state of the hauling machine 100. For example, the detection mechanism 110 may be a speed sensor, a heat sensor, or some other sensor that can monitor the state of a component of the hauling machine 100.

A detection mechanism 110 may be mounted at any point on the mounting mechanism 140. Depending on where the detection mechanism 110 is mounted relative to the loading or unloading mechanism 120, one or the other may pass over a geographic area in the environment before the other. For example, the detection mechanism 110 may be positioned on the mounting mechanism 140 such that it traverses over a geographic location before the loading or unloading mechanism 120 as the hauling machine 100 moves through the environment. In another examples, the detection mechanism 110 is positioned to the mounting mechanism 140 such that the two traverse over a geographic location at substantially the same time as the hauling machine 100 moves through the environment. Similarly, the detection mechanism 110 may be positioned on the mounting mechanism 140 such that the loading or unloading mechanism 120 traverses over a geographic location before the detection mechanism 110 as the hauling machine 100 moves through the environment. The detection mechanism 110 may be statically mounted to the mounting mechanism 140 or may be removably or dynamically coupled to the mounting mechanism 140. In other examples, the detection mechanism 110 may be mounted to some other surface of the hauling machine 100 or may be incorporated into another component of the hauling machine 100.

### Verification mechanism(s)

The hauling machine 100 may include a verification mechanism 150. Generally, the verification mechanism 150 records a measurement of the operating environment 102 and the hauling machine 100 may use the recorded measurement to verify or determine the extent of an implemented action (i.e., a result of the action).

To illustrate, consider an example where a hauling machine 100 implements an action based on a measurement of the operating environment 102 by the detection mechanism 110. The verification mechanism 150 records a measurement of the same geographic area measured by the detection mechanism 110 and where hauling machine 100 implemented the determined action. The hauling machine 100 then processes the recorded measurement to determine the result of the action. For example, the verification mechanism 150 may record an image of an object (e.g., tree) in a geographic region identified by the detection mechanism 110 and treated by an loading or unloading mechanism 120. The hauling machine 100 may apply an interaction detection algorithm to the recorded image to determine the result of the interaction applied to (or around) the object.

Information recorded by the verification mechanism 150 can also be used to empirically determine operation parameters of the hauling machine 100 that will obtain the desired effects of implemented actions (e.g., to calibrate the hauling machine 100, to modify protocols, etc.). For instance, the hauling machine 100 may apply a calibration detection algorithm to a measurement recorded by the hauling machine 100. In this case, the hauling machine 100 determines whether the actual effects of an implemented action are the same as its intended effects. If the effects of the implemented action are different than its intended effects, the hauling machine 100 may perform a calibration process. The calibration process changes operation parameters of the hauling machine 100 such that effects of future implemented actions are the same as their intended effects. To illustrate, consider the previous example where the hauling machine 100 recorded an image of a treated object (e.g., a tree). There, the hauling machine 100 may apply a calibration algorithm to the recorded image to determine whether the interaction is appropriately calibrated (e.g., at its intended location in the operating environment 102). If the hauling machine 100 determines that the hauling machine 100 is not calibrated (e.g., the applied interaction is at an incorrect location), the hauling machine 100 may calibrate itself such that future interactions are in the correct location. Other example calibrations are also possible.

The verification mechanism 150 can have various configurations. For example, the verification mechanism 150 can be substantially similar (e.g., be the same type of mechanism as) the detection mechanism 110 or can be different from the detection mechanism 110. In some cases, the detection mechanism 110 and the verification mechanism 150 may be one in the same (e.g., the same sensor). In an example configuration, the verification mechanism 150 is positioned distal the detection mechanism 110 relative the direction of travel 115, and the loading or unloading mechanism 120 is positioned there between. In this configuration, the verification mechanism 150 traverses over a geographic location in the operating environment 102 after the loading or unloading mechanism 120 and the detection mechanism 110. However, the mounting mechanism 140 can retain the relative positions of the system components in any other suitable configuration. In some configurations, the verification mechanism 150 can be included in other components of the hauling machine 100.

The hauling machine 100 can include any number or type of verification mechanism 150. In some embodiments, the verification mechanism 150 includes one or more sensors. For example, the verification mechanism 150 can include a multispectral camera, a stereo camera, a CCD camera, a single lens camera, a CMOS camera, hyperspectral imaging system, LIDAR system (light detection and ranging system), a depth sensing system, dynamometer, IR camera, thermal camera, humidity sensor, light sensor, temperature sensor, or any other suitable sensor. Further, the verification mechanism 150 may include an array of sensors (e.g., an array of cameras) configured to capture information about the environment 102 surrounding the hauling machine 100. For example, the verification mechanism 150 may include an array of cameras configured to capture an array of pictures representing the operating environment 102.

The verification mechanism 150 may further comprise one or more on-machine sensors configured to measure characteristics of the vehicle 100 itself, in addition to or instead of capturing information about the external environment 102. For example, the verification mechanism 150 may include, without limitation, load cells, strain gauges, pressure sensors positioned on the machine (e.g., within the cargo compartment) to measure the total weight of cargo and its distribution across the compartment. Additional examples of on-machine sensors that may be incorporated into the verification mechanism 150 include accelerometers for detecting movements during transit (e.g., shifting loads), tilt sensors for monitoring the orientation of the vehicle relative to the ground, displacement sensors for determining the position of movable partitions or gates within the cargo area, etc. These sensors generate measurement data that can be processed by the control system 130 to verify whether the loading or unloading mechanism 120 has achieved a desired distribution of cargo or to detect conditions or characteristics of the cargo.

The verification mechanism 150 (and the detection mechanism 110) of the vehicle 100 may include or utilize sensors that are positioned within the environment 102 rather than being physically mounted on the vehicle 100 itself. These externally located sensors may be configured to capture environmental data or operational parameters relevant to the actions performed by the vehicle 100, and the control system 130 can access this information via a wired or wireless communication link. For example, a static camera may be installed at a fixed location within the environment 102 to continuously monitor a designated loading or unloading zone, the autonomous machine, the cargo of the autonomous machine etc. The static camera may provide image data that can be analyzed to verify the presence, distribution, or characteristics of cargo after an unloading event. Similarly, a machine weight measurement device, such as a weighbridge or embedded scale, may be positioned at a transit point in the environment 102 to record the weight of the vehicle 100 before and after loading or unloading operations, thereby enabling the control system 130 to verify the quantity of material transferred. Other examples of sensors in the work environment 102 are also possible.

### Interaction mechanism(s)

The hauling machine 100 may include one or more interaction mechanisms, such as a loading or unloading mechanism 120. The loading or unloading mechanism 120 can implement actions in the operating environment 102 of a hauling machine 100 (although not all actions need to be performed by the loading or unloading mechanism 120). For instance, a hauling machine 100 may include a loading or unloading mechanism 120 that applies an interaction to an object in the operating environment 102, such as identifying, measuring, loading, or unloading cargo. More generally, the hauling machine 100 employs the loading or unloading mechanism 120 to apply an interaction to an interaction area, and the interaction area may include anything within the operating environment 102 (e.g., a hole or structure). In other words, the interaction area may be any portion of the operating environment 102.

If an interaction is a construction interaction, the loading or unloading mechanism 120 applies an interaction to further construction in the environment. The loading or unloading mechanism 120 may apply interactions to identified pieces of earth (e.g., rocks, dirt, etc.) or building materials. For example, the hauling machine 100 may identify and interact with a specific rock in the environment. Alternatively, or additionally, the hauling machine 100 may identify some other trigger that indicates an interaction is necessary and the loading or unloading mechanism 120 may apply a construction interaction. Some example construction loading or unloading mechanisms 120 include: one or more pavers, one or more loaders, one or more boom lifts, and one or more other physical implements configured to manipulate material in a construction environment, but other construction loading or unloading mechanisms 120 are also possible.

If the interaction is a ground interaction, the loading or unloading mechanism 120 applies an interaction to some portion of the ground in the environment. The loading or unloading mechanism 120 may apply interactions to identified areas of the ground, or non-identified areas of the ground. For example, the hauling machine 100 may identify and interact with an area of ground in the environment. Alternatively, or additionally, the hauling machine 100 may identify some other trigger that indicates a ground interaction and the loading or unloading mechanism 120 may apply an interaction to the ground. Some example loading or unloading mechanisms 120 configured for applying interactions to the ground include: one or more excavators, one or more forklifts, and one or more physical implements configured to manipulate the ground (e.g., a pile driver tool), but other ground loading or unloading mechanisms 120 are also possible.

Depending on the configuration, the hauling machine 100 may include various numbers of loading or unloading mechanisms 120 (e.g., 1, 2, 5, 20, 60, etc.). A loading or unloading mechanism 120 may be fixed (e.g., statically coupled) to the mounting mechanism 140 or attached to the hauling machine 100. Alternatively, or additionally, a loading or unloading mechanism 120 may be movable (e.g., translatable, rotatable, etc.) on the hauling machine 100. In one configuration, the hauling machine 100 includes a single loading or unloading mechanism 120. In this case, the loading or unloading mechanism 120 may be actuatable to align the loading or unloading mechanism 120 to an interaction area 122. In a second variation, the hauling machine 100 includes a loading or unloading mechanism 120 assembly comprising an array of loading or unloading mechanisms 120. In this configuration, an loading or unloading mechanism 120 may be a single loading or unloading mechanism 120, a combination of loading or unloading mechanisms 120, or the loading or unloading mechanism 120 assembly. Thus, either a single loading or unloading mechanism 120, a combination of loading or unloading mechanisms 120, or the entire assembly may be selected to apply an interaction to an interaction area. Similarly, either the single, combination, or entire assembly may be actuated to align with an interaction area, as needed. In some configurations, the hauling machine 100 may align a loading or unloading mechanism 120 with an identified object in the operating environment 102. That is, the hauling machine 100 may identify an object in the operating environment 102 and actuate the loading or unloading mechanism 120 such that its interaction area aligns with the identified object.

A loading or unloading mechanism 120 may be operable between a standby mode and an interaction mode. In the standby mode, the loading or unloading mechanism 120 does not apply an interaction, and in the interaction mode, the loading or unloading mechanism 120 is controlled by the control system 130 to apply the interaction. However, the loading or unloading mechanism 120 can be operable in any other suitable number of operation modes.

### Control system(s)

The hauling machine 100 includes a control system 130. The control system 130 controls operation of the various components and systems on the hauling machine 100. For instance, the control system 130 can obtain information about the operating environment 102, processes that information to identify an action to implement, and implement the identified action with system components of the hauling machine 100.

The control system 130 can receive information from the detection mechanism 110, the verification mechanism 150, the loading or unloading mechanism 120, or any other component or system of the hauling machine 100. For example, the control system 130 may receive measurements from the detection mechanism 110 or verification mechanism 150, or information relating to the state of a loading or unloading mechanism 120 or implemented actions from a verification mechanism 150. Other information is also possible.

Similarly, the control system 130 can provide input to the detection mechanism 110, the verification mechanism 150, or the loading or unloading mechanism 120. For instance, the control system 130 may be configured to input and control operating parameters of the hauling machine 100 (e.g., speed or direction). Similarly, the control system 130 may be configured to input and control operating parameters of the detection mechanism 110 or verification mechanism 150. Operating parameters of the detection mechanism 110 or verification mechanism 150 may include processing time, location, or angle of the detection mechanism 110, image capture intervals, image capture settings, etc. Other inputs are also possible. The control system may be configured to generate machine inputs for the loading or unloading mechanism 120. That is, translating an action of a protocol into machine instructions implementable by the loading or unloading mechanism 120.

The control system 130 can be operated by a user operating the hauling machine 100, wholly or partially autonomously, operated by a user connected to the hauling machine 100 by a network, or any combination of the above. For instance, the control system 130 may be operated by a manager sitting in a cabin of the hauling machine 100, or the control system 130 may be operated by a manager connected to the control system 130 via a wireless network. In another example, the control system 130 may implement an array of control algorithms, machine vision algorithms, decision algorithms, etc. that allow it to operate autonomously or partially autonomously.

The control system 130 may be implemented by a computer or a system of distributed computers. The computers may be connected in various network environments. For example, the control system 130 may be a series of computers implemented on the hauling machine 100 and connected by a local area network. In another example, the control system 130 may be a series of computers implemented on the hauling machine 100, in the cloud, a client device and connected by a wireless area network.

The control system 130 can apply one or more computer models to determine and implement actions in the environment. For example, in an example farming context, the control system 130 can apply a plant identification module to images acquired by the detection mechanism 110 to determine and implement actions. In another example, in an example construction context, the control system 130 can apply a boundary detection module to images acquired by the detection mechanism 110 to determine and implement actions. The control system 130 may be coupled to the hauling machine 100 such that an operator (e.g., a driver) can interact with the control system 130. In other embodiments, the control system 130 is physically removed from the hauling machine 100 and communicates with system components (e.g., detection mechanism 110, loading or unloading mechanism 120, etc.) wirelessly.

In some configurations, the hauling machine 100 may additionally include a communication apparatus, which functions to communicate (e.g., send or receive) data between the control system 130 and a set of remote devices. The communication apparatus can be a Wi-Fi communication system, a cellular communication system, a short-range communication system (e.g., Bluetooth, NFC, etc.), or any other suitable communication system.

### Other Vehicle Components

In various configurations, the hauling machine 100 may include any number of additional components.

For instance, the hauling machine 100 may include a mounting mechanism 140. The mounting mechanism 140 provides a mounting point for the components of the hauling machine 100. That is, the mounting mechanism 140 may be a chassis or frame to which components of the hauling machine 100 may be attached but could alternatively be any other suitable mounting mechanism 140. More generally, the mounting mechanism 140 statically retains and mechanically supports the positions of the detection mechanism 110, the loading or unloading mechanism 120, and the verification mechanism 150.

The hauling machine 100 may include locomoting mechanisms. The locomoting mechanisms may include any number of wheels, continuous treads, articulating legs, or some other locomoting mechanism(s). For instance, the hauling machine 100 may include a first set and a second set of coaxial wheels, or a first set and a second set of continuous treads. In the either example, the rotational axis of the first and second set of wheels/treads are approximately parallel. Further, each set may be arranged along opposing sides of the hauling machine 100. Typically, the locomoting mechanisms are attached to a drive mechanism that causes the locomoting mechanisms to translate the hauling machine 100 through the operating environment 102. For instance, the hauling machine 100 may include a drive train for rotating wheels or treads. In different configurations, the hauling machine 100 may include any other suitable number or combination of locomoting mechanisms and drive mechanisms.

The hauling machine 100 may also include one or more coupling mechanisms 142 (e.g., a hitch). The coupling mechanism 142 functions to removably or statically couple various components of the hauling machine 100. For example, a coupling mechanism may attach a drive mechanism to a secondary component such that the secondary component is pulled behind the hauling machine 100. In another example, a coupling mechanism may couple one or more loading or unloading mechanisms 120 to the hauling machine 100.

The hauling machine 100 may additionally include a power source, which functions to power the system components, including the detection mechanism 110, control system 130, and loading or unloading mechanism 120. The power source can be mounted to the mounting mechanism 140, can be removably coupled to the mounting mechanism 140, or can be incorporated into another system component (e.g., located on the drive mechanism). The power source can be a rechargeable power source (e.g., a set of rechargeable batteries), an energy harvesting power source (e.g., a solar system), a fuel consuming power source (e.g., a set of fuel cells or an internal combustion system), or any other suitable power source. In other configurations, the power source can be incorporated into any other component of the hauling machine 100.

Example hauling machines 100 configured for various environments are further described below with reference to FIGS. 1B-1C.

### IV. EXAMPLE HAULING MACHINES

An example embodiment of hauling machine 100 is a construction vehicle. A construction vehicle is a vehicle configured to operate in a construction environment and to accomplish (or contribute to accomplishing) one or more objectives in the construction environment, such as loading and unloading cargo. A construction action may be any operation implementable by a construction vehicle within the construction environment that works towards the one or more objectives. Construction vehicles can include a wide variety of vehicles (e.g., bulldozers, front loaders, dump trucks, backhoes, graders, trenchers, cranes, loaders, crawler dozers, compactors, forklifts, conveyors, and mixer trucks) which can perform a variety of construction actions (e.g., excavating, pile driving, loading objects, unloading objects, lifting objects, clearing debris, grading, and digging trenches) in construction protocols to accomplish construction objectives (e.g., building a road, digging a trench, digging a hole, clearing a portion of dirt, or moving dirt from point A to point B).

An example construction environment that a construction vehicle can operate in is a construction site or project site. A construction environment may be an area used to construct, repair, maintain, improve, extend, or demolish buildings, infrastructure, or industrial facilities. A construction environment may include one or more of the following: a secure perimeter to restrict unauthorized access, site access control points, office and welfare accommodation for personnel from the main contractor and other firms involved in the project team, or storage areas for materials, machinery (e.g., construction vehicles), or equipment. In some cases, a construction environment is formed when the first feature of a permanent structure has been put in place, such as pile driving, or the pouring of slabs or footings.

FIGS. 1B and 1C illustrate example hauling machines (construction vehicles 100B, 100C), according to some embodiments. Specifically, FIG. 1B is an isometric view of a wheel loader construction vehicle 100B, and FIG. 1C is an isometric view of a dump truck construction vehicle 100C. As illustrated, each construction vehicle (100B, 100C) each include a detection mechanism (110B, 110C), a loading or unloading mechanism (120B, 120C), a control system (130B, 130C), a mounting mechanism (140B, 140C), a coupling mechanism (142B, 142C), and a verification mechanism (150B, 150C), which are example component embodiments of the corresponding components in FIG. 1A.

In one example situation, the loader 100B in FIG. 1B is engaged in moving material from a pile to the loading or unloading mechanism 120C (e.g., cargo bed) of the dump truck 100C in FIG. 1C. To fill the truck 100C, the loader 100B starts by moving forward along a path to pick up a load and, once at the pile, digs the loading or unloading mechanism 120B (e.g., bucket) into the pile to fill the loading or unloading mechanism 120D with material. Then, the loader 100B backs away from the pile, while turning to face the dump truck 100D. Then the loader drives to the dump truck 100C, raising its loading or unloading mechanism 120B (e.g., bucket) and dumps the material into the loading or unloading mechanism 120C of the dump truck 100C. Afterwards, the loader 100B backs up and turns to face the pile, repeating the process. As further described below, the loader 100B may encounter moisture during any of these construction actions or before or after the completion of the objective, in between objectives, or in other scenarios. The loader 100B or the dump truck 100C may employ a control system (130B, 130C) to identify moisture in the environment. For instance, the control system 130B may employ a traversability model to reduce the likelihood of the loader 100B becoming immobilized (e.g., getting stuck) in terrain, and may employ a moisture model to reduce the likelihood of the loader 100B performing an action that will damage the environment.

### V. SYSTEM ENVIRONMENT

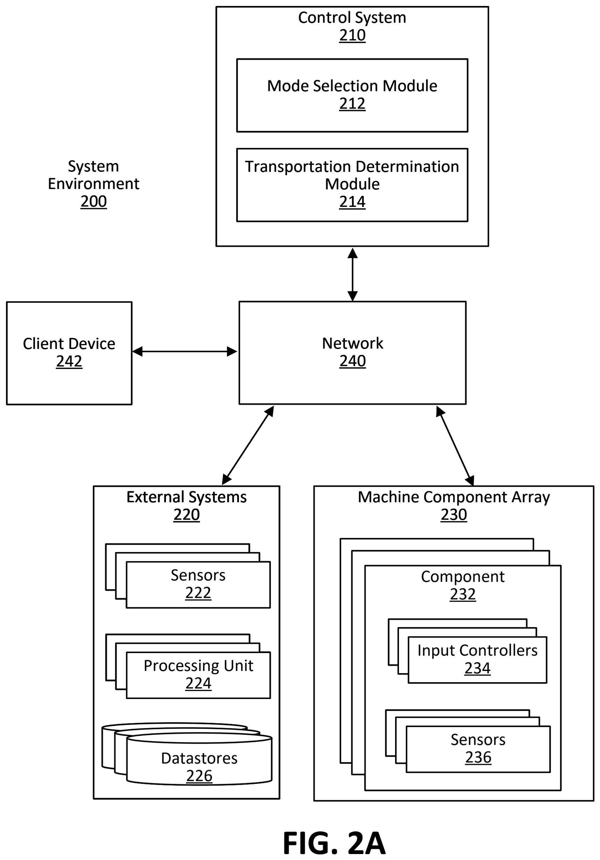

FIG. 2A is a block diagram of the system environment for the hauling machine 100, in accordance with one or more example embodiments. In this example, the control system 210 (e.g., control system 130) is connected to external systems 220 and a vehicle component array 230 via a network 240 within the system environment 200.

The external systems 220 are any system that can generate data representing information useful for determining and implementing actions in an environment. External systems 220 may include one or more sensors 222, one or more processing units 224, and one or more datastores 226. The one or more sensors 222 can measure the environment 102, the hauling machine 100, etc. and generate data representing those measurements. For instance, the sensors 222 may include a rainfall sensor, a wind sensor, heat sensor, a camera, etc. The processing units 2240 may process measured data to provide additional information that may aid in determining and implementing actions in the environment. For instance, a processing unit 224 may access an image of an environment and may access historical weather information for an environment to generate a forecast for the environment. Datastores 226 store historical information regarding the hauling machine 100, the operating environment 102, etc. that may be beneficial in determining and implementing actions. For instance, the datastore 226 may store results of previously implemented protocols and actions for an environment, a nearby environment, or the region. The historical information may have been obtained from one or more vehicles (i.e., measuring the result of an action from a first vehicle with the sensors of a second vehicle). Further, the datastore 226 may store results of specific actions in the environment, or results of actions taken in nearby environments having similar characteristics. The datastore 226 may also store historical weather, flooding, environment use, objects in the environment, etc. for the environment and the surrounding area. Finally, the datastores 226 may store any information measured by other components in the system environment 200.

The vehicle component array 230 includes one or more components 232. Components 232 are elements of the hauling machine 100 that can take actions (e.g., a loading or unloading mechanism 120). As illustrated, each component has one or more input controllers 234 and one or more sensors 236, but a component may include only sensors 236 or only input controllers 234. An input controller 234 controls the function of the component 232. For example, an input controller 234 may receive machine commands via the network 240 and actuate the component 232 in response. A sensor 236 generates data representing measurements of the operating environment and provides that data to other systems and components within the system environment 200. The measurements may be of a component 232, the hauling machine 100, the operating environment, etc. For example, a sensor 236 may measure a configuration or state of the component 232 (e.g., a setting, parameter, power load, etc.), measure conditions in the operating environment (e.g., moisture, temperature, etc.), capture information representing the operating environment (e.g., images, depth information, distance information), and generate data representing the measurement(s).

The control system 210 receives information from external systems 220, the machine component array 230, and/or a client device 242 and implements a protocol in an environment with the hauling machine 100. The control system 210 includes a mode selection module 212 and a transportation determination module 214 but may include additional or fewer modules. Moreover, the functionality of the various modules may be different than described herein, and/or may be provided by different elements in the system environment 200. The mode selection module 212 and the transportation determination module 214 are describe in depth below.

The network 240 connects nodes of the system environment 200 to allow microcontrollers and devices to communicate with each other. In some embodiments, the components are connected within the network as a Controller Area Network (CAN). In this case, within the network each element has an input and output connection, and the network 240 can translate information between the various elements. For example, the network 240 receives input information from the external system 220, processes the information, and transmits the information to the control system 210. The control system 210 generates an action based on the information and transmits instructions to implement the action to the appropriate component(s) 232 of the component array 230.

Additionally, the system environment 200 may be other types of network environments and include other networks, or a combination of network environments with several networks. For example, the system environment 200, can be a network such as the Internet, a LAN, a MAN, a WAN, a mobile wired or wireless network, a private network, a virtual private network, a direct communication line, and the like.

Returning now to the control system 210, the mode selection module 212 is configured to select, access, receive, etc. an operating protocol for the autonomous vehicle 100 to implement at a jobsite. The operating protocol is a set of parameters, rules, or objectives that govern the actions of the autonomous machine within a given environment 102. The mode selection module 212 may receive the operating protocol from an external system, such as a site manager or remote server, or may autonomously select the protocol based on environmental data, jobsite requirements, or historical performance data. By determining the appropriate operating protocol, the mode selection module 212 enables the vehicle 100 to align its operational behavior with the desired objectives for the jobsite.

The mode selection module 212 supports multiple operational modes that govern the behavior of the vehicle 100 in performing loading or unloading actions within the environment 102.

The first example operational mode is the navigation efficiency mode. In this configuration, the control system 130 prioritizes minimizing (or reducing) the total travel time or distance required for the vehicle 100 to complete its assigned tasks, such as by selecting the shortest available paths between loading and unloading locations or by optimizing route planning to avoid congestion and obstacles.

The second example operational mode is the storage efficiency mode. In this configuration, the control system 130 prioritizes the optimal (or improved) use of available storage space within the environment 102, such as by determining unloading locations that maximize the density of stored cargo, minimize the footprint of cargo piles, or reduce redundant use of storage zones.

The second example operational mode is the cargo characteristics mode. In this configuration, the control system 130 considers the specific properties or attributes of the cargo being transported (e.g., material type, grade, size, or other distinguishing features) when selecting loading or unloading locations. This enables the system to group similar cargos together or comply with protocol requirements for segregation, categorization, regulations, etc. Each of these modes may be selected independently or in combination, and the control system 130 may dynamically adjust operational priorities based on the current protocol, environmental conditions, or received instructions.

To illustrate, consider, for example, a construction vehicle 100 operating at a jobsite where multiple objectives must be balanced. Upon initialization, the mode selection module may receive a protocol from a site manager that prioritizes minimizing the time required to transport and unload materials, while also ensuring that similar materials are stored in designated regions of the site. The mode selection module processes these protocol parameters and configures the control system 130 to operate in a navigation efficiency mode, directing the vehicle 100 to select the shortest available paths between loading and unloading locations, and to group unloading actions by material type. As the jobsite conditions change, such as increased congestion or updated storage requirements, the mode selection module can dynamically update the operating protocol, thereby adapting the vehicle's actions to maintain alignment with the evolving jobsite objectives.

The control system 130 includes a transportation determination module 214. The transportation determination module is configured to determine navigation paths and corresponding operational actions for the vehicle 100 in accordance with a protocol specified for the jobsite. A navigation path is a sequence of positions or waypoints within the environment 102 that the vehicle 100 may traverse to reach designated locations (e.g., such as loading or unloading zones, while avoiding obstacles and complying with operational constraints. Operational actions are specific commands or instructions generated by the control system 130 for actuating components of the vehicle 100 to implement actions according to the selected or accessed protocol.

To generate navigation paths and operational actions, the transportation determination inputs and processes data representing the environment 102. To expand, the transportation determination module 214 receives input data from the detection mechanism 110 and/ or verification mechanism 150 which may include sensor or image data describing the environment 102. The transportation determination module 214 processes this data to identify relevant features such as obstacles, terrain characteristics, designated loading or unloading locations, cargo characteristics, etc.

Based on the protocol, the transportation determination module 214 generates a sequence of actions and pathing instructions for the vehicle 100 to perform actions at the jobsite according to that protocol. These instructions may include, e.g., route selection, maneuvering commands, and actuation signals for the loading or unloading mechanism 120 to execute specific tasks at identified locations. The transportation determination module 214 may further update or refine its output in response to real-time environmental changes or feedback from the verification mechanism 150, thereby enabling the vehicle 100 to adaptively implement the protocol as conditions at the jobsite evolve.

The transportation determination module 214 may apply one or more models to generate paths and their corresponding actions. The models, in general, may be recognition models or navigation models, but could be other models.

Generally, recognition models are configured to identify and locate features of interest within the environment 102 or in (or on) the hauling machine based on various types of input data. Recognition models may include, e.g., image classification models, object detection models, semantic segmentation models, sensor fusion models, or other machine learning or rule-based models designed to extract relevant information from images, sensor readings, or combined data sources. These models process data such as images acquired by the detection mechanism 110, measurements from environmental or vehicle-mounted sensors, or data streams aggregated from multiple sources, and generate outputs that are used by the control system 130 to inform navigation, loading, and unloading actions in accordance with a defined protocol.

The recognition model(s) may include one or more distinct models, each configured to process different types of input data or to perform different classification or detection tasks. For example, a first model may be configured to analyze images captured by the detection mechanism 110 to identify candidate unloading locations, while a second model may process sensor data such as LIDAR or depth measurements to assess terrain features, while a third model may perform data fusion to combine image and sensor data for improved accuracy, while a third model may leverage sensor data from a cargo compartment to determine cargo characteristics. Each model receives data as input and outputs classifications or feature identifications that are used by the control system 130 to plan navigation paths and operational actions in alignment with the current protocol.

Generally, navigation models are configured to generate navigation paths and corresponding operational actions for the vehicle 100 based on features identified within the environment 102 and in accordance with a specified protocol. Navigation models may include, for example, path planning algorithms, route optimization models, obstacle avoidance algorithms, motion planning models, or other machine learning or rule-based models designed to determine efficient and protocol-compliant vehicle trajectories. These models process inputs such as spatial positions of candidate locations, environmental constraints, detected obstacles, and protocol parameters to compute sequences of waypoints, maneuvering commands, and actuation signals for the vehicle and its components. The outputs of the navigation models are utilized by the control system 210 to direct the vehicle 100 along optimal routes, execute loading or unloading actions at designated sites, and dynamically adapt to changes in the environment or protocol requirements.

Similarly, the navigation model(s) may include one or more distinct models, each configured to process different types of input data or to perform different navigation or machine command generation tasks. For example, a first model may be configured to input positions of candidate locations and generate a path, while a second model may the path to generate the corresponding machine actions to implement that path. Each model receives environment data, identified features, etc. as input and outputs navigation or actuation instructions used by the control system 130 to plan navigation paths and operational actions in alignment with the current protocol.

As an example, consider an autonomous construction vehicle navigating to a designated jobsite. Upon arrival, the control system 210 receives real-time image data from onboard sensors 236 and external sensors 222. The transportation determination module 214 applies a first recognition model to the image data to identify the spatial positions of potential dump locations within the site. A second model analyzes the same or additional sensor data to determine whether each identified location currently contains cargo. For locations with detected cargo, a third model classifies the cargo's characteristics, such as type, size, or composition. Based on the outputs of these recognition models, control system 210 applies a model to generate navigation paths for the vehicle to traverse to selected dump locations (taking into account factors such as identified obstacles and protocol adherence). The control system applies an additional model to generate corresponding operational actions (e.g., maneuvering instructions and actuation signals for the loading or unloading mechanism) to implement the unloading process at the designated location.

The control system 210 may also generate a jobsite map. A jobsite map is a representation of features identified at the jobsite (e.g., dumping locations). To do so, the control system 210 inputting various features detected in the environment, such as the positions of obstacles, designated loading and unloading zones, terrain characteristics, and the locations of cargo or materials, as identified by the sensors and processed by the external systems 220 and machine component array 230. The control system 210 utilizes these inputs to generate a map that provides the real-world location of each identified feature. This job-site map may serve as a foundational data structure for subsequent operations, as it may be employed by the mode selection module 212 and transportation determination module 214 to generate navigation paths and to select or adapt operational protocols based on the current configuration and objectives of the jobsite. By referencing the jobsite map, the control system 210 can dynamically update navigation decisions and protocol selection in response to changes in the environment or operational requirements.

Using this information, the transportation determination module 214 generates a jobsite map and, in accordance with the current operational protocol set by the mode selection module 212, applies a navigation model to determine optimal paths and actions for the vehicle. For instance, the module may generate control signals for the input controllers 234 to direct the vehicle to a selected dump location, actuate the loading or unloading mechanism, and update the system state based on feedback from the sensors 236. This process enables the autonomous machine to dynamically assess the environment, select appropriate locations for loading or unloading, and execute actions in alignment with jobsite protocols.

### VI. JOBSITE ENVIRONMENT

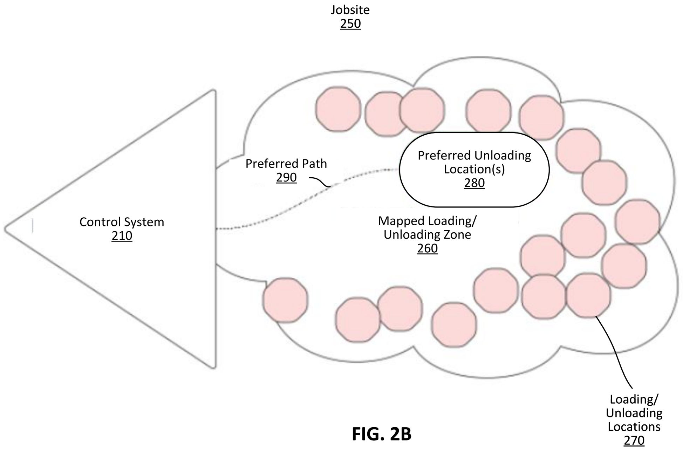

FIG. 2B is a schematic representation of an operating environment (i.e., a physical jobsite 250) of the hauling machine 100, in accordance with one or more example embodiments. In this example, the control system 210 of the hauling machine 100 receives environmental data from a suite of internal and external sensors, including the sensors 236 of the machine component array 230 and additional sensors 222 of any external system 220 communicatively connected to the control system 210. The control system can apply signal processing and machine vision techniques to the environmental data to generate a map of the physical environment, particularly designated loading and unloading zones 260. Loading and unloading zones 260 are regions of the jobsite 250 which have been designated as areas for, e.g., bulk materials storage, although other types of material designations are possible. In addition to generating a map of the physical environment without prior knowledge of the jobsite, the control system 210 can also be configured to receive map data (e.g., pre-generated map data or partial map data) from any external system 220, including other hauling machines.

In an embodiment, a hauling machine 100 may receive instructions as part of the transportation protocol to designate a region of the jobsite 250 as a loading or unloading zone 260. For example, a site manager can instruct a fleet of autonomous hauling machines 100 at a worksite to utilize the same shared loading and unloading zone 260 via geo-fencing. In other embodiments, the site manager can choose to permit loading and unloading in all regions of a worksite except for those specifically designated as unsuitable areas. Because autonomous hauling machines often coexist with semi-autonomous and non-autonomous vehicles, it is advantageous for a hauling machine 100 to be able to independently identify, assess, and navigate to specific unloading locations 270 (e.g., dump piles) within an unloading zone 260.

The selection of unloading locations 270 can significantly affect the efficiency of a jobsite. In the example of FIG. 2B, the mapped portion of the loading or unloading zone 260 is being filled out in a horseshoe-like pattern with dumped materials at each of the unloading locations 270. The selected unloading locations 270 avoid creating a hazard which would block access to the loading and unloading zone 260 for subsequent trips. Accordingly, the entire loading and unloading zone will eventually be filled to capacity.

The control system 210 of the autonomous hauling machine can survey the loading and unloading zone 260 to assess possible candidate unloading locations. The control system 210 can assess the terrain, including existing dump piles, to identify a preferred unloading location 280 in alignment with the transportation protocol and navigate to the location 280 along a preferred path 290. For example, using pixel data, the control system 210 can identify existing dump piles of the same type as a cargo being transported by the autonomous hauling machine 100 and elect to unload the cargo nearby. In an embodiment, the transportation protocol may include instructions (e.g., by geo-fencing) to avoid blocking an access road through the loading and unloading zone 260. The transportation protocol may also cause the autonomous hauling machine 100 to prioritize reducing the length of trips between a loading location and the preferred unloading location 280. Those skilled in the art will also appreciate that the high degree of independence afforded to such autonomous hauling machines will result in emergent transportation and storage solutions beyond those discussed herein.

### VII. EXAMPLE AUTONOMOUS UNLOADING IMPLEMENTATIONS

As described above, the control system 210 of the autonomous hauling machine 100 independently determines control signals to transport and unload cargo in a manner which is aligned with a transportation protocol set by a manager.

### First Example

FIG. 3 illustrates a workflow for determining control signals for a hauling machine to unload cargo at a preferred unloading location, in accordance with one or more example embodiments. The workflow 300 may include additional or fewer steps, and the steps may occur in a different order. One or more of the steps may be repeated or omitted depending on the circumstances.

In this example, an autonomous or semi-autonomous hauling machine is operating on a jobsite. The jobsite includes different regions designated as loading/unloading zones for materials storage and prohibited (non-loading/unloading) zones such as roads and walkways. Each of those loading/unloading zones can include dump piles of various materials at discrete unloading locations. Some loading/unloading zones may be designated as a dumping area for only a single material (e.g., high-grade paydirt), while other zones may include multiple materials or material types. Each dump pile has various characteristics, such as color and texture, which the hauling machine can identify using an image recognition model to assist in selecting a preferred unloading location.

The hauling machine includes one or more interaction mechanisms for interacting with the environment, such as a loading or unloading mechanism configured to load or unload cargo. The hauling machine (e.g., hauling machine 100) autonomously travels through the jobsite (e.g., from a loading zone to an unloading zone) to transport a cargo. The hauling machine accesses 310 images for each region of the jobsite, particularly the loading and unloading zones. The images may be captured by an image acquisition system of the hauling machine (e.g., detection mechanism 110). Each image includes pixels representing the objects in the jobsite such as, e.g., terrain features, obstacles, dump piles, other vehicles, etc.

The hauling machine includes a control system (e.g., control system 130, 210), and the control system applies 320 a cargo recognition model to the images. The cargo recognition model may be implemented within a determination module (e.g., transportation determination module 214) of the control system.

The cargo recognition model identifies 322 each unloading location (e.g., dump pile) in the image. The identified dump piles may be associated with the region of the jobsite they were captured. (For example, the control system may recognize that a particular unloading location is designated for aggregate dumping only.) The cargo recognition model identifies dump piles based on latent information in the pixels of the image representing each unloading locations.

The cargo recognition model identifies 324 an unloading location by identifying pixels in the image corresponding to the dump pile which represent the unloading location. Again, the cargo recognition model may do this based on latent information in the pixels representing the pile. Similarly, the cargo recognition model determines 326 cargo characteristics for the unloading location using the pixels identified as representing the dump pile.

The hauling machine determines 330 an unloading plan for its own cargo based on the determined cargo characteristics for each unloading location. For example, the hauling machine may determine that an existing dump pile is too large and select a new preferred unloading location some distance away. Determining the unloading plan may include determining control signals (e.g., control signals for navigating the hauling machine and unloading the cargo) when the proximal to the preferred unloading location.

The hauling machine actuates 340 a loading or unloading mechanism to implement the unloading plan. To do so, the hauling machine actuates the loading/unloading mechanism with the control signals configured for implementing the unloading plan.

### Second Example

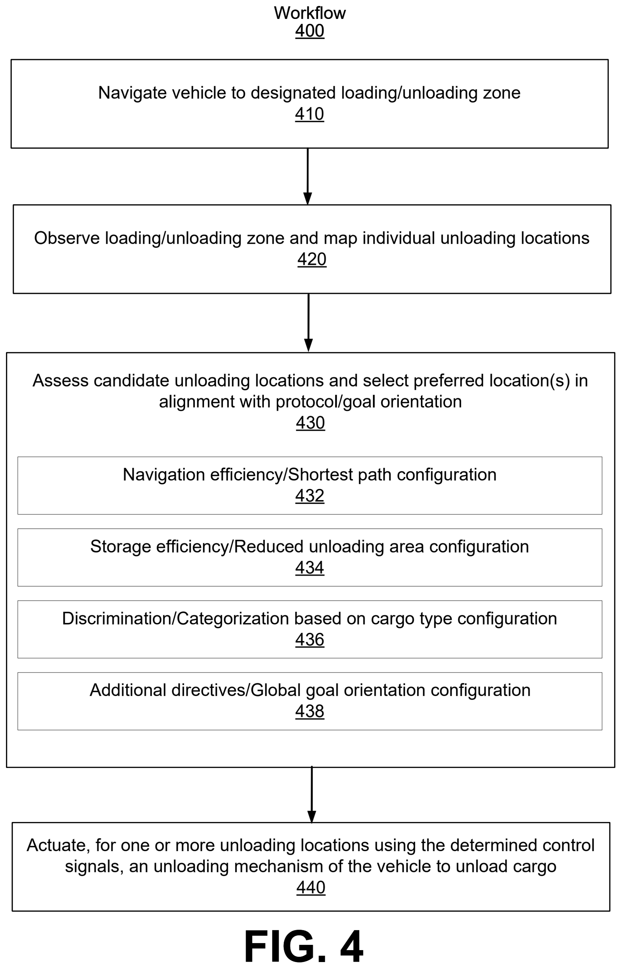

FIG. 4 illustrates a workflow for determining control signals for a hauling machine to unload cargo at a preferred unloading location, in accordance with one or more example embodiments. The workflow 400 may include additional or fewer steps, and the steps may occur in a different order. One or more of the steps may be repeated or omitted depending on the circumstances.

In this example, an autonomous or semi-autonomous hauling machine is operating on a jobsite. The job includes different regions designated as loading/unloading zones for materials storage and prohibited (non-loading/unloading) zones such as roads and walkways. Each of those loading/unloading zones can include dump piles of various materials at discrete unloading locations. Some loading/unloading zones may be designated as a dumping area for only a single material (i.e., high-grade paydirt), while other zones may include multiple materials or material types. Each dump pile has various characteristics, such as color and texture, which the hauling machine can identify using an image recognition model to assist in selecting a preferred unloading location.

The hauling machine includes one or more interaction mechanisms for interacting with the environment, such as a loading or unloading mechanism configured to load or unload cargo. The hauling machine (e.g., hauling machine 100) autonomously travels through the jobsite (e.g., navigating 410 from a loading zone to an unloading zone) to transport a cargo. The hauling machine accesses images for each region of the jobsite, particularly the loading and unloading zones. The images may be captured by an image acquisition system of the hauling machine (e.g., detection mechanism 110). Each image includes pixels representing the objects in the jobsite such as, e.g., terrain features, obstacles, dump piles, other vehicles, etc., and features representing the characteristics of those objects. In turn, the hauling machine observes 420 objects (i.e., dump piles) in each unloading zone of the and generates a map of individual unloading locations corresponding to those objects.

The hauling machine includes a control system (e.g., control system 130, 210), including a mode selection model (e.g., mode selection module 212) which selects 430 one or more preferred unloading locations based on a goal orientation set by the transportation protocol.

In this example, the hauling machine includes a navigation efficiency configuration 432 (to prioritize traversing the shortest path), a storage efficiency configuration 434 (to avoid redundant unloading locations and maximize the size of individual dump piles), a discrimination/categorization configuration 436 (unloading alike cargos near each other), and any additional directives/goal orientation configuration 438 set by a manager as part of the transportation protocol. The mode selection module can also weigh multiple priorities to arrive at a preferred unloading location based on compromise. For example, a manager can direct a fleet of autonomous hauling machines to prioritize shortest-path navigation while continuing to unload alike cargos in the same unloading zone, even if doing so is not necessarily the shortest path.

Upon navigating to the preferred unloading location, the hauling machine actuates 440 loading or unloading mechanism(s) to unload the cargo in the unloading zone in accordance with the transportation protocol for the worksite.

As the hauling machine navigates different regions of the worksite, the mode selection model can continue to update the configuration to implement feedback based on environmental input and changes to the transportation protocol.

### Third Example

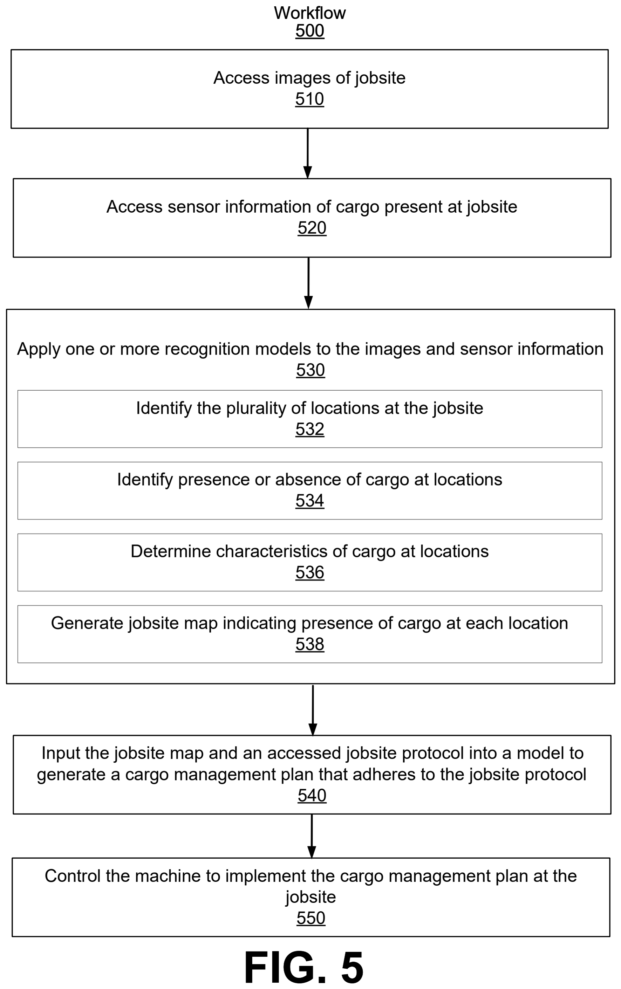

FIG. 5 illustrates a workflow for determining control signals for a hauling machine to unload cargo at a preferred unloading location, in accordance with one or more example embodiments. The workflow 500 may include additional or fewer steps, and the steps may occur in a different order. One or more of the steps may be repeated or omitted depending on the circumstances.

At 510, the workflow begins as a machine enters a jobsite. The machine may be an autonomous hauling machine autonomously controlling a machine to manage cargo loads at a plurality of locations of a jobsite. A control system of the machine accesses images of the jobsite. The images include representations of a number of locations, such as designated loading or unloading zones (e.g., in the latent pixel information). The loading and unloading zones are defined areas within the jobsite where cargo may be deposited or retrieved by the autonomous machine, and these zones may be identified in the images through visual or spatial features. The control system of the autonomous machine may access these images from onboard image acquisition systems or from external sources positioned at the jobsite. Examples of image acquisition systems may include, without limitation, multispectral cameras, stereo cameras, or other imaging sensors configured to capture visual data of the environment.

At 520, the control system of the machine accesses sensor information that describes cargo present at the jobsite. Sensor information may include, e.g., images, measurements from the machine, or other data streams generated by sensors associated with the autonomous machine or installed at fixed locations within the jobsite. For example, measurements may be obtained from load cells, pressure sensors, or weight sensors integrated into the machine, or from external devices such as weighbridges or static cameras monitoring the loading or unloading zones.

At step 530, the control system applies one or more recognition models to the images and sensor information acquired from the environment. The recognition models are computational models (e.g., image classification models, object detection models, or sensor fusion algorithms) configured to extract relevant features from input data. The recognition models identify 532 the locations at the jobsite, determines 534 the presence or absence of cargo at these locations, and, where cargo is present, determines 536 characteristics of the cargo at each location. Characteristics may include, e.g., material type, volume, color, or other distinguishing features. The control system generates 538 a jobsite map that indicates the presence or absence of cargo at each identified location as well as relevant cargo characteristics.

At 540, the control system inputs the jobsite map and an accessed jobsite protocol into a model to generate a cargo management plan that adheres to the jobsite protocol. The jobsite protocol is a set of operational parameters, rules, or objectives that define how cargo is to be managed within the environment, such as requirements for navigation efficiency, storage efficiency, or cargo type segregation. The navigation model processes the jobsite map and protocol to determine a sequence of actions for the autonomous machine to implement. These actions may include, for example, selecting unloading locations, determining the order of unloading operations, and generating control signals for actuating the unloading mechanism. The resulting cargo management plan aligns the actions of the machine with the requirements specified in the jobsite protocol.

At 550, the control system controls the machine to traverse the jobsite and implement the cargo management plan generated in the preceding steps. The cargo management plan, as implemented, is a set of actions, navigation paths, and operational instructions that manage cargo at locations within the jobsite based on the jobsite map and the accessed jobsite protocol. The control system may issue commands to the machine's locomotion and actuation subsystems, directing the vehicle to move between designated locations and to perform loading or unloading actions as specified by the plan. The control system may further monitor feedback from onboard or external sensors during traversal, enabling dynamic adjustment of the machine's actions in response to changes in the environment or operational parameters. This process allows the autonomous machine to execute the cargo management plan in accordance with the specified protocol, maintaining alignment with operational objectives and adapting to real-time jobsite conditions.

### VIII. CONTROL SYSTEM

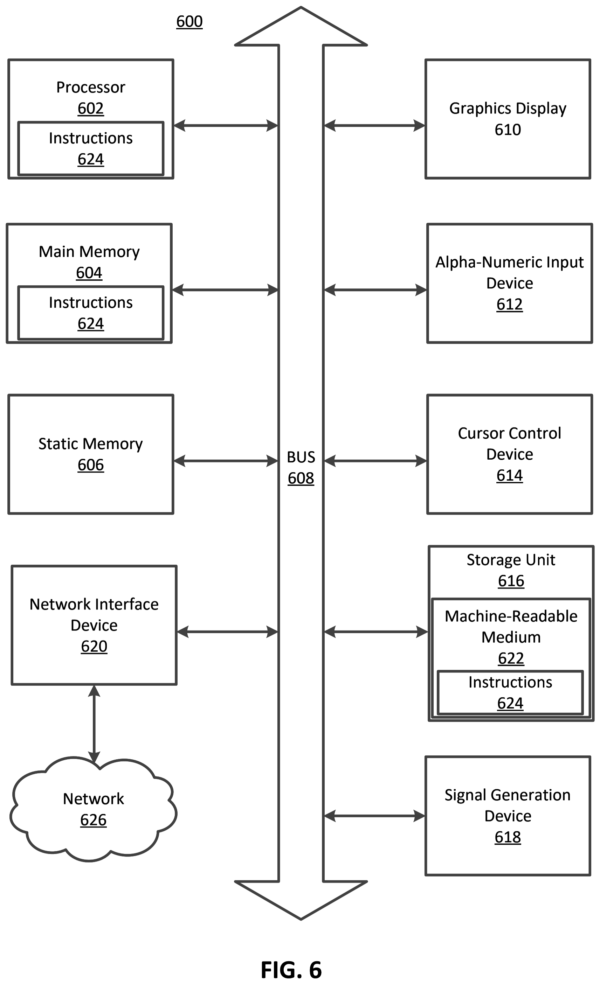

FIG. 6 is a block diagram illustrating components of an example machine for reading and executing instructions from a machine-readable medium. Specifically, FIG. 6 shows a diagrammatic representation of control system 130 in the example form of a computer system 600. The computer system 600 can be used to execute instructions 624 (e.g., program code or software) for causing the machine to perform any one or more of the methodologies (or processes) described herein. In alternative embodiments, the machine operates as a standalone device or a connected (e.g., networked) device that connects to other machines. In a networked deployment, the machine may operate in the capacity of a server machine or a client machine in a server-client network environment, or as a peer machine in a peer-to-peer (or distributed) network environment.

The machine may be a server computer, a client computer, a personal computer (PC), a tablet PC, a set-top box (STB), a smartphone, an internet of things (IoT) appliance, a network router, switch or bridge, or any machine capable of executing instructions 624 (sequential or otherwise) that specify actions to be taken by that machine. Further, while only a single machine is illustrated, the term "machine" shall also be taken to include any collection of machines that individually or jointly execute instructions 624 to perform any one or more of the methodologies discussed herein.

The example computer system 600 includes one or more processing units (generally processor 602). The processor 602 is, for example, a central processing unit (CPU), a graphics processing unit (GPU), a digital signal processor (DSP), a control system, a state machine, one or more application specific integrated circuits (ASICs), one or more radio-frequency integrated circuits (RFICs), or any combination of these. The computer system 600 also includes a main memory 604. The computer system may include a storage unit 616. The processor 602, memory 604, and the storage unit 616 communicate via a bus 608.

In addition, the computer system 600 can include a static memory 606, a graphics display 610 (e.g., to drive a plasma display panel (PDP), a liquid crystal display (LCD), or a projector). The computer system 600 may also include alphanumeric input device 612 (e.g., a keyboard), a cursor control device 614 (e.g., a mouse, a trackball, a joystick, a motion sensor, or other pointing instrument), a signal generation device 618 (e.g., a speaker), and a network interface device 620, which also are configured to communicate via the bus 608.

The storage unit 616 includes a machine-readable medium 622 on which is stored instructions 624 (e.g., software) embodying any one or more of the methodologies or functions described herein. For example, the instructions 624 may include the functionalities of modules of the system 130 described in FIGs. 2A and 2B. The instructions 624 may also reside, completely or at least partially, within the main memory 604 or within the processor 602 (e.g., within a processor's cache memory) during execution thereof by the computer system 600, the main memory 604 and the processor 602 also constituting machine-readable media. The instructions 624 may be transmitted or received over a network 626 via the network interface device 620.

### IX. ADDITIONAL CONSIDERATIONS

In the description above, for purposes of explanation, numerous specific details are set forth in order to provide a thorough understanding of the illustrated system and its operations. It will be apparent, however, to one skilled in the art that the system can be operated without these specific details. In other instances, structures and devices are shown in block diagram form in order to avoid obscuring the system.

Reference in the specification to "one embodiment" or "an embodiment" means that a particular feature, structure, or characteristic described in connection with the embodiment is included in at least one embodiment of the system. The appearances of the phrase "in one embodiment" in various places in the specification are not necessarily all referring to the same embodiment.

Some portions of the detailed descriptions are presented in terms of algorithms or models and symbolic representations of operations on data bits within a computer memory. An algorithm is here, and generally, conceived to be steps leading to a desired result. The steps are those requiring physical transformations or manipulations of physical quantities. Usually, though not necessarily, these quantities take the form of electrical or magnetic signals capable of being stored, transferred, combined, compared, and otherwise manipulated. It has proven convenient at times, principally for reasons of common usage, to refer to these signals as bits, values, elements, symbols, characters, terms, numbers, or the like.

It should be borne in mind, however, that all of these and similar terms are to be associated with the appropriate physical quantities and are merely convenient labels applied to these quantities. Unless specifically stated otherwise as apparent from the following discussion, it is appreciated that throughout the description, discussions utilizing terms such as "processing" or "computing" or "calculating" or "determining" or "displaying" or the like, refer to the action and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

Some of the operations described herein are performed by a computer physically mounted within a machine. This computer may be specially constructed for the required purposes, or it may comprise a general-purpose computer selectively activated or reconfigured by a computer program stored in the computer. Such a computer program may be stored in a computer readable storage medium, such as, but is not limited to, any type of disk including floppy disks, optical disks, CD ROMs, and magnetic optical disks, read only memories (ROMs), random access memories (RAMs), EPROMs, EEPROMs, magnetic or optical cards, or any type of non-transitory computer readable storage medium suitable for storing electronic instructions.

The figures and the description above relate to various embodiments by way of illustration only. It should be noted that from the following discussion, alternative embodiments of the structures and methods disclosed herein will be readily recognized as viable alternatives that may be employed without departing from the principles of what is claimed.

One or more embodiments have been described above, examples of which are illustrated in the accompanying figures. It is noted that wherever practicable similar or like reference numbers may be used in the figures and may indicate similar or like functionality. The figures depict embodiments of the disclosed system (or method) for purposes of illustration only. One skilled in the art will readily recognize from the following description that alternative embodiments of the structures and methods illustrated herein may be employed without departing from the principles described herein.

Some embodiments may be described using the expression "coupled" and "connected" along with their derivatives. It should be understood that these terms are not intended as synonyms for each other. For example, some embodiments may be described using the term "connected" to indicate that two or more elements are in direct physical or electrical contact with each other. In another example, some embodiments may be described using the term "coupled" to indicate that two or more elements are in direct physical or electrical contact. The term "coupled," however, may also mean that two or more elements are not in direct physical or electrical contact with each other, but yet still co-operate or interact with each other. The embodiments are not limited in this context.

As used herein, the terms "comprises," "comprising," "includes," "including," "has," "having" or any other variation thereof, are intended to cover a non-exclusive inclusion. For example, a process, method, article or apparatus that comprises a list of elements is not necessarily limited to only those elements but may include other elements not expressly listed or inherent to such process, method, article, or apparatus. Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B is true (or present).

In addition, use of the "a" or "an" are employed to describe elements and components of the embodiments herein. This is done merely for convenience and to give a general sense of the system. This description should be read to include one or at least one and the singular also includes the plural unless it is obvious that it is meant otherwise.

Upon reading this disclosure, those of skill in the art will appreciate still additional alternative structural and functional designs for a system and a process for operating a vehicle (e.g., a hauling machine) in an environment with moisture including a control system executing a semantic segmentation model. Thus, while particular embodiments and applications have been illustrated and described, it is to be understood that the disclosed embodiments are not limited to the precise construction and components disclosed herein. Various modifications, changes and variations, which will be apparent to those, skilled in the art, may be made in the arrangement, operation and details of the method and apparatus disclosed herein without departing from the spirit and scope defined in the appended claims.

## Claims

1. A method for autonomously controlling a machine (100) to manage cargo loads at a plurality of locations of a jobsite, the method comprising:
accessing (510) images of the jobsite including the plurality of locations;
accessing (520) sensor information describing cargo present at the jobsite;
applying (530) one or more recognition models to the images and the sensor information, the one or more recognition models configured to:
identify (532) the plurality of locations in the jobsite;
identify (534) a presence or an absence of cargo at each location;
responsive to a location indicating a presence of cargo at the location, identify (536) characteristics of the cargo at the location; and
generate (538) a jobsite map comprising the plurality of locations, each location indicating the presence or absence of cargo at each location and characteristics of the cargo present at the location;
inputting (540) the jobsite map and an accessed jobsite protocol into a navigation model to generate a cargo management plan that adheres to the accessed jobsite protocol, the cargo management plan representing actions for the machine to implement for managing cargo at the plurality of locations;
controlling (550) the machine to traverse the jobsite to implement the cargo management plan.

2. The method of claim 1, wherein the accessed jobsite protocol comprises instructions to improve navigation efficiency and generating the cargo management plan comprises:
determining a navigation path for the machine based on a total time spent traversing the jobsite to implement the cargo management plan.

3. The method of claim 1, wherein the accessed jobsite protocol comprises instructions to improve storage efficiency and generating the cargo management plan comprises:
selecting a set of locations for the cargo management plan based on a total space occupied by cargo present at the jobsite.

4. The method of claim 1, wherein the accessed jobsite protocol comprises instructions to store cargo based on cargo characteristics, and generating the cargo management plan comprises:
selecting locations for cargo present at the jobsite such that cargo having similar characteristics are present in a similar region of locations.

5. The method of claim 1, wherein the accessed jobsite protocol comprises instructions to manage cargo on two or more parameters.

6. The method of any one of the preceding claims, wherein applying one or more recognition models to the images and sensor information comprises:
applying an image classification model to the accessed images, the image classification model:
identifying pixels in the images representing locations, and
mapping identified pixels representing the locations to real world positions at the jobsite.

7. The method of any one of claim 1 to 5, wherein applying one or more recognition models to the images and sensor information comprises:
applying an image classification model to the accessed images, the image classification model:
identifying pixels in the images representing characteristics of unloaded cargo, and
determining the cargo characteristics using the identified pixels.

8. The method of any one of the preceding claims, wherein identifying characteristics comprises receiving the characteristics from a client device or a network system.

9. The method of any one of the preceding claims, wherein the cargo management plan is further based on cargo characteristics of cargo present in a cargo compartment area of the machine.

10. The method of claim 9, further comprising:
accessing one or more images of the cargo in the cargo compartment of the machine; and
determining, based on the one or more images, cargo characteristics of the cargo present in the cargo compartment of the machine.

11. The method of any one of the preceding claims, wherein accessing images of the jobsite comprises capturing the images using an image acquisition system of the machine as it travels through the jobsite.

12. The method of any one of claims 1 to 10, wherein accessing images of the jobsite comprises accessing the images from an image acquisition system statically positioned at the jobsite.

13. The method of any one of the preceding claims, wherein generating the cargo management plan for the machine occurs on a computational machine remote from the machine.

14. A machine (100) comprising:
one or more imaging systems (110) configured for capturing images of a jobsite comprising a plurality of locations;
one or more sensor systems (110) configured for obtaining sensor information describing cargo present at the jobsite;
one or more actuation mechanisms (120) configured for interacting with the jobsite;
one or more processors; and
a non-transitory computer readable storage medium storing instructions for controlling the machine to manage cargo loads at the plurality of locations of the jobsite, the instructions, when executed by the one or more processors, causing the machine to perform steps comprising:
accessing (510), from the one or more imaging systems, images of the jobsite including the plurality of locations;
accessing (520), from the one or more sensor systems, sensor information describing cargo present at the jobsite;
applying (530) one or more recognition models to the images and the sensor information, the one or more recognition models configured to:
identify (532) the plurality of locations in the jobsite;
identify (534) a presence or an absence of cargo at each location;
responsive to a location indicating a presence of cargo at the location, identify (536) characteristics of the cargo at the location; and
generate (538) a jobsite map comprising the plurality of locations, each location indicating the presence or absence of cargo at each location and characteristics of the cargo present at the location;
inputting (540) the jobsite map and an accessed jobsite protocol into a navigation model to generate a cargo management plan that adheres to the accessed jobsite protocol, the cargo management plan representing actions for the machine to implement for managing cargo at the plurality of locations;
controlling (550), the one or more actuation mechanisms of the machine to traverse the jobsite to implement the cargo management plan.

15. A non-transitory computer readable storage medium storing instructions for autonomously controlling a machine to manage cargo loads at a plurality of locations of a jobsite, the instructions, when executed by one or more processors, causing the one or more processors to perform the method according to any one of claims 1 to 13.
